# FASCICULE DE BREVET EUROPEEN

(11) **EP 0 838 053 B1**
(45) Date de publication et mention de la délivrance du brevet: **23.06.2004**
(21) Numéro de dépôt: 97921901.1
(22) Date de dépôt: 29.04.1997
(51) Int. Cl.: G06F 9/40

(54) **PROCEDE ET DISPOSITIF PERMETTANT A UN PROGRAMME FIGE DE POUVOIR EVOLUER**
VERFAHREN UND GERÄT ZUR EVOLUTION EINES PROGRAMMES IN ROM
METHOD AND DEVICE ENABLING A FIXED PROGRAMME TO BE DEVELOPED

(30) Priorité: 30.04.1996 FR 9605454
(43) Date de publication de la demande: 29.04.1998
(73) Titulaire: CP8 Technologies, 78431 Louveciennes (FR)
(72) Inventeur: NASSOR, Azadali, F-78450 Villepreux (FR)
(74) Mandataire: den Braber, Gerard Paul
(86) Numéro de dépôt international: PCT/FR1997/000759
(87) Numéro de publication internationale: WO 1997/041510

(56) Documents cités:
- FR-A- 2 667 417
- US-A- 5 241 634
- IBM TECHNICAL DISCLOSURE BULLETIN, vol. 35, no. 1B, 1 Juin 1992, pages 455-456, XP000309137 "SOFTWARE TECHNIQUE TO CALL FOR THE CLEANING OF AIR FILTERS BY MONI-TORING POWER-ON HOURS"

## Description

La présente invention concerne les programmes d'ordinateur et notamment ceux incorporés dans des supports à microcircuit(s) et, plus généralement les objets portatifs dotés de circuits intégrés comportant au moins une unité centrale, une mémoire morte de programme, une mémoire non volatile programmable et une mémoire de travail. Cette mémoire non volatile est capable de stocker des données et du code, et l'unité centrale peut faire exécuter ce code par l'unité centrale.

Dans un même objet il est connu jusqu'à ce jour de faire cohabiter deux types très différents de programme, l'un est inscrit dès la fabrication dans le circuit intégré et non modifiable, l'autre est introduit de l'extérieur au cours de l'utilisation normale de l'objet selon les besoins.

De nos jours, les supports à microcircuit(s) peuvent répondre techniquement à de nombreux besoins. Cependant, la réalisation d'un "masque", c'est à dire le programme dans la mémoire ROM, reste encore très cher et cet investissement décourage bon nombre de "petits" clients qui désireraient acheter quelques milliers de cartes. Une solution consisterait à utiliser un masque existant et rajouter les fonctions que demande le client dans la mémoire programmable.

La possibilité d'introduire et d'exécuter un code supplémentaire en mémoire programmable offre l'avantage de pouvoir facilement rajouter à un programme existant de nouvelles fonctions ou d'adapter ce programme à des besoins spécifiques.

Le brevet FR 2 655 170 décrit un dispositif électronique portatif capable d'enregistrer des séquences de codes en mémoire non volatile. La mémoire programmable non volatile comprend une partie particulière configurée en vue de contenir des séquences de codes, cette partie est elle-même divisée en une zone d'indicateurs, une zone de données de séquences de codes et une zone de caractères de contrôle par bloc. Une instruction de test est implémentée dans le programme en mémoire morte pour lire et tester la zone des indicateurs, et dans le cas favorable réaliser le saut. A chaque saut doit donc correspondre une instruction de test et une zone mémoire allouée en mémoire programmable.

Il est également connu par la demande de brevet français 2 667 417 une carte à microprocesseur conçue pour recevoir des programmes multiples en mémoire programmable dans laquelle des instructions dites de filtrage sont associées à chacun des emplacements réservés en mémoire programmable pour constituer un moyen de mémorisation de l'adresse du code d'un sous programme d'instructions accessible par exécution de l'instruction de filtrage mémorisée dans la mémoire morte de la carte. Chaque instruction de filtrage doit connaître l'adresse de la zone mémoire contenant l'adresse du code associé dans la mémoire programmable, ce qui impose une hiérarchie d'accès figée une fois pour toute.

Les deux solutions évoquées ci-dessus présentent les inconvénients ci-après.

Un homme du métier désirant implémenter plusieurs instructions de saut doit multiplier les instructions de saut dans le programme en mémoire morte et les zones spécifiques en mémoire programmable. Si un grand nombre d'instructions de ce type doivent être installées dans le programme principal, la place totale qu'elles occupent en mémoire morte devient importante au détriment de celle du programme. De plus, dans la mémoire programmable non volatile, même si le sous-programme n'est pas enregistré, sa place est réservée ainsi que celle des indicateurs, ce qui occupe inutilement une place non négligeable. Enfin, une fois écrit, le sous-programme ne peut plus être modifié. En résumé, cette solution convient à un nombre très restreint d'instructions de saut et quelques sous-programmes, en aucun cas le problème d'un nombre important de sauts et de sous-programmes n'est résolu.

La présente invention a pour objet un procédé et un dispositif permettant de faire évoluer les fonctionnalités d'une carte à puce sans les inconvénients des brevets cités et notamment en permettant un nombre plus important d'appels à des sous programmes. En effet, le dispositif selon l'invention offre les avantages d'être facile à mettre en oeuvre dans un programme, ou d'utiliser peu de mémoire code, ou de minimiser la taille mémoire utilisée, ou d'être évolutif et d'autoriser toutes sortes de modifications, ou d'optimiser le temps d'exécution.

Pour ce faire, le dispositif d'exécution de séquences de code dans un support comprenant un circuit intégré capable d'exécuter des séquences de code et, d'une part, une première mémoire contenant un programme principal et éventuellement d'autres séquences de codes exécutables par le circuit intégré et, d'autre part, une seconde mémoire programmable non volatile contenant éventuellement des séquences de codes exécutables par le circuit intégré et une troisième mémoire de travail, est caractérisé en ce qu'une table d'orientation contenue dans la seconde mémoire contient au moins un champ contenant une donnée de référence de code :
des premiers moyens (INS_INT) permettent :
   - de vérifier la présence d'une référence de code,
   - de mémoriser en mémoire de travail la donnée d'adresse associée à la référence du code et de positionner un indicateur de déroutement DI et,
des seconds moyens (INS_ORT) permettent :
   - de tester l'indicateur de déroutement DI et,
   - d'effectuer le saut à l'adresse pointée par le contenu de la mémoire de travail.

Selon une autre particularité la donnée d'adresse d'une séquence de code contenue dans l'une des trois mémoires associée à la référence de code est calculée à partir de la référence de code.

Selon une autre particularité un deuxième champ contient la donnée d'adresse d'une séquence de code contenue dans l'une des trois mémoires.

Selon une autre particularité le dispositif comporte dans une zone éventuellement protégée de la mémoire programmable une information définissant la première adresse et éventuellement le sens de recherche pour les premiers moyens de vérification.

Selon une autre particularité la table d'orientation comporte un champ supplémentaire indiquant l'adresse suivante dans la table où se trouvent les informations correspondantes à la référence de code suivant.

Selon une autre particularité la table d'orientation comporte un champ supplémentaire permettant de s'assurer de l'intégrité des champs précédents et/ou de séquence de code rattachée par comparaison avec le résultat fourni par un moyen de calcul d'une somme de contrôle.

Selon une autre particularité les seconds moyens comportent des moyens de mémoriser en mémoire de travail une adresse de retour après un saut, lorsque plusieurs seconds moyens sont disponibles pour effectuer un saut, à destination de la même adresse de séquence.

Selon une autre particularité le dispositif comporte des moyens CAI d'empêcher l'enregistrement d'un code additionnel, et des moyens RCI d'empêcher une régénération de la carte.

Un autre but est de proposer un procédé d'enregistrement de nouvelles fonctionnalités.

Ce but est atteint par le fait que le procédé d'enregistrement d'un nouveau code dans un dispositif selon une des revendications précédentes, est caractérisé en ce qu'il consiste :
- à recevoir un ordre d'enregistrement ;
- à vérifier la présence d'un premier champ constituant la référence de code A, B, C,... et d'un second champ AD_Cod_A, AD_Cod_B, AD_Cod_C... représentant l'adresse associée à la référence de code ;
- à vérifier que la valeur de la première adresse constituant l'adresse de table d'orientation AD_TAB est cohérente ;
- à vérifier qu'un drapeau ECA n'est pas actif ;
- à contrôler que la référence fournie par le premier champ n'existe pas dans la table ;
- à positionner le drapeau ECA dans la zone de mémoire programmable protégée à l'état actif ;
- à recevoir et écrire les informations correspondantes au nouveau code ;
- à vérifier que l'opération s'est déroulée correctement et mettre à jour la table d'orientation ;
- à positionner le drapeau ECA à l'état inactif.

Selon une autre particularité l'opération de mise à jour de la table comporte une écriture du champ d'adresse suivante dans la table d'orientation à l'adresse correspondant au mot d'orientation du code qui précède le code écrit.

D'autres particularités et avantages de la présente invention apparaîtront plus clairement à la lecture de la description ci-après d'un exemple de réalisation du dispositif et de mise en oeuvre du procédé, illustrés à l'aide des figures ci-après dans lesquelles :
- la figure 1 représente une partition de la mémoire programmable de la carte utilisant une variante de procédé de gestion de la table d'orientation ;
- la figure 2 représente un exemple de partition de la mémoire morte de la carte ;
- la figure 3 représente dans un programme principal un exemple d'enchaînement d'une instruction d'interrogation exécutée dans le cours du programme principal et ultérieurement d'une instruction d'orientation ;
- la figure 4 représente un exemple d'enchaînement possible d'instructions d'interrogation et d'orientation ;
- la figure 5 représente un exemple d'algorithme de déroulement d'une séquence de code constituant l'instruction d'interrogation ;
- la figure 6 représente un exemple de configuration de la partition de la mémoire programmable incorporant la table d'orientation et les zones de séquences de code ;
- la figure 7 représente un deuxième exemple de réalisation de la partition de la mémoire incorporant la table d'orientation et les zones de séquences de code ;
- la figure 8 représente un exemple d'organigramme de déroulement d'une séquence de code constituant une instruction d'orientation ;
- la figure 9 représente un exemple des champs constitutifs d'une instruction d'écriture d'une séquence ;
- la figure 10 représente l'organigramme de déroulement d'une séquence d'enregistrement déclenchée par une instruction d'écriture ;
- la figure 11 représente les éléments constitutifs d'un support à microcircuit(s) nécessaire à la mise en oeuvre du dispositif et du procédé de l'invention.

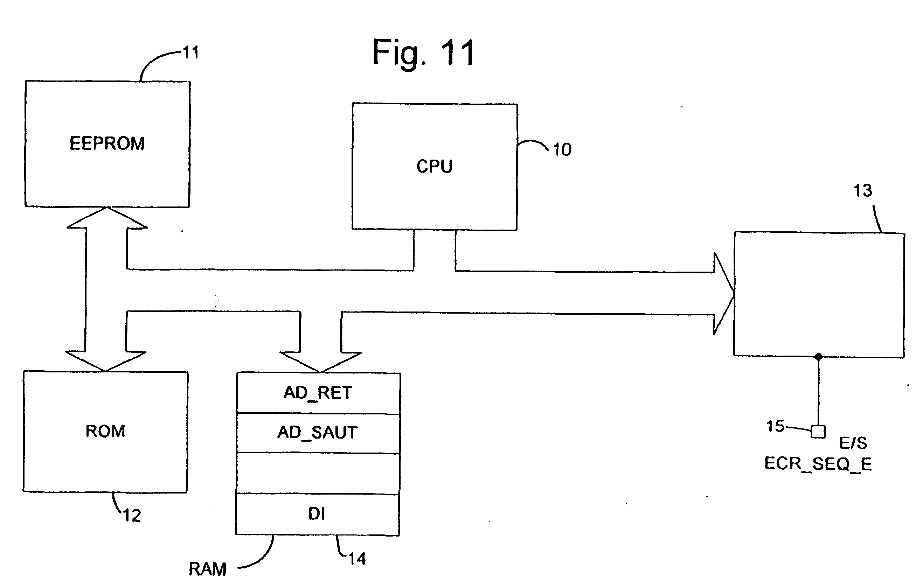

L'invention sera mieux comprise par la description de l'exemple d'utilisation ci-dessous, dans une carte à microprocesseur selon la figure 11.

Une carte à microprocesseur possède une Unité Centrale (10) de type microprocesseur ou à circuit intégré capable d'exécuter des séquences d'instructions, une mémoire de travail RAM (14), une mémoire non volatile ROM (12) contenant le programme principal, une mémoire non volatile (11) EPROM, EEPROM ou FRAM programmable et exécutable par l'U.C. contenant des données et, des organes d'entrées/sorties (13) permettant le dialogue avec un lecteur par une liaison (15) avec ou sans contact. Le programme est gravé en ROM lors de la fabrication du composant, il ne peut donc pas être modifié par la suite.

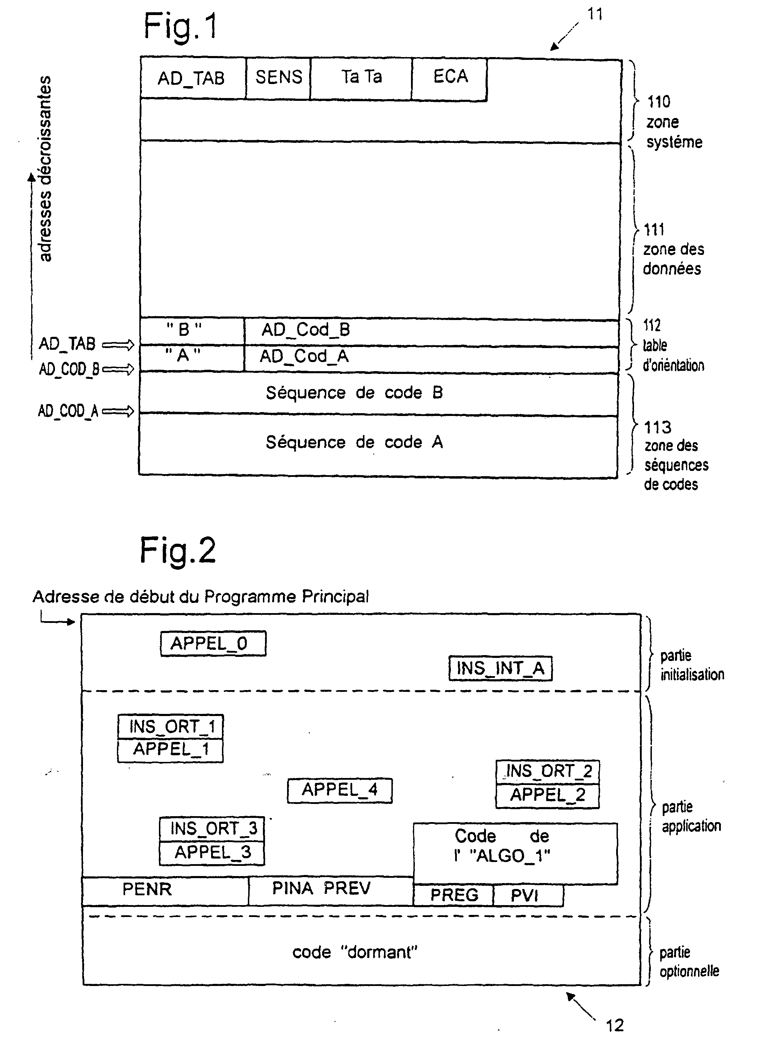

La mémoire programmable (11) est divisée en plusieurs parties, comme le montre la figure 1. Une première partie (110) notée zone système contient des informations systèmes non lisibles de l'extérieur, permettant de contrôler la validité (authenticité et/ou intégrité) et la localisation des informations ou groupe de données contenus dans le reste de la mémoire (pointeurs...). Une seconde partie (111) notée zone de données est accessible de l'extérieur et sert au stockage des données utilisateurs. Une troisième partie (112) notée table d'orientation contient la table d'orientation, cette dernière est formée d'éléments identiques, chaque élément contient plusieurs champs dont deux principaux : le premier est une donnée de référence de code :"A", "B", ... et le second est l'adresse de début de la séquence de code correspondante mémorisée dans une quatrième partie (113) de la mémoire : AD_Cod_A, AD_Cod_B... La quatrième zone notée zone de séquence de code contient les séquences de code pouvant être appelées par le programme principal. Il est à noter que dans une variante de l'invention la table d'orientation ou la séquence de code peut être chargée en mémoire de travail (RAM) au lieu de l'EEPROM.

L'adresse de début de la table d'orientation appelée AD_TAB, est mémorisée dans la zone système, une seconde information notée SENS, détermine dans quel sens le pointeur lit cette table, soit dans le sens des adresses croissantes, soit dans le sens des adresses décroissantes. Les adresses des valeurs AD_TAB et SENS peuvent être ainsi les seules données relatives à l'invention que le programme en ROM connaît. Il peut être utile également de mémoriser la taille en octets ou le nombre d'éléments maximum (Ta Ta) de la table d'orientation.

Voici un exemple illustrant l'intérêt du procédé de déroutement selon l'invention. Le programme principal peut contenir un algorithme tel le D.E.S. (Data Encryption Standard) capable d'effectuer du chiffrement/déchiffrement d'informations ou certaines fonctions d'authentifications. Il peut être intéressant de remplacer cet algorithme par un autre, ou de changer complètement son implémentation, afin de le rendre par exemple plus rapide. Le code de l'algorithme constitue un bloc dans la mémoire ROM de l'Operating System, ce code n'est pas modifiable et il peut être appelé de divers endroits du programme principal.

L'exemple sera mieux compris en regardant la figure 2. La mémoire ROM qui contient entre autres le programme principal, est divisée en trois parties. La première réalise l'initialisation de la carte après une mise sous tension : le test de la mémoire de travail, la lecture de l'état de la carte, l'émission des octets de la réponse au RESET. La seconde partie contient le programme d'application qui exécute les différents ordres demandés par le terminal (la première partie de code est toujours exécutée avant la seconde). Les première et seconde parties constituent le programme principal. La troisième partie contient le code "dormant" dont le rôle est expliqué par la suite.

L'algorithme appelé ALGO_1 dont on veut modifier le fonctionnement est contenu dans la partie application. Dans l'exemple, cet algorithme est appelé depuis cinq endroits différents du code. Le nouvel algorithme a été préalablement chargé dans la zone de séquence de codes dans la mémoire programmable et la table d'orientation a été mise à jour, l'adresse d'exécution de sa séquence de code est AD_Cod_A.

A la mise sous tension, le programme principal exécute la partie initialisation, on trouve dans cette partie le premier saut à ALGO_1 noté "APPEL_0", aucun déroutement n'est prévu donc ce saut n'est conditionné par aucune instruction de déroutement. On y trouve également une séquence d'instruction d'interrogation: INS_INT_A que le programmeur a pris soin d'implémenter dans cette partie afin d'être sûr de l'exécuter au moins une fois avant l'exécution du programme de la partie application. Dans l'exemple, la référence de code associée à cette séquence d'instruction d'interrogation est "A", elle est inscrite dans le programme principal. Dans un premier temps, l'instruction d'interrogation cherche dans la zone système l'adresse de la table d'orientation AD_TAB. Puis, à partir de cette adresse et dans le sens des adresses croissantes ou décroissantes selon la valeur de "SENS", chaque élément de la table est lu. La valeur des premiers champs correspondant aux références de code est comparée avec la valeur "A". Si la valeur "A" est trouvée dans un premier champ de la table d'orientation, la valeur du second champ correspondante (AD_Cod_A) est lue et stockée dans le registre AD_SAUT en mémoire de travail (RAM) et un indicateur de déroutement (DI) en mémoire de travail est mis en position active.

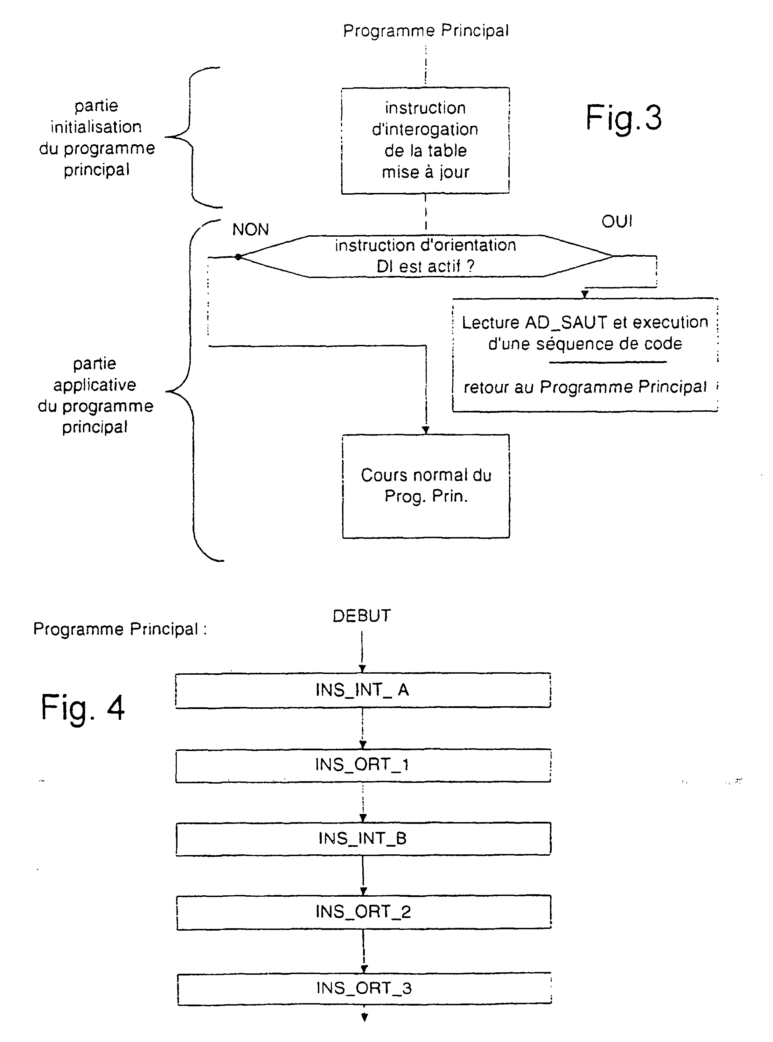

Le sous programme ALGO_1 est appelé cinq fois par APPEL_O, APPEL_1, ..... APPEL_4 dans le programme principal lorsque DI n'est pas actif. Pour APPEL_1, APPEL_2 et APPEL_3, le déroutement vers un autre programme ALGO_2 qui peut être en mémoire morte ou en mémoire programmable est réalisé lorsque l'indicateur de déroutement DI est actif car le programmeur a pris soin d'implémenter dans le code du programme principal une instruction d'orientation : INS_ORT_1, INS_ORT_2 et INS_ORT_3 avant chaque saut APPEL_1, APPEL_2, APPEL_3 effectif dans ALGO_1. Comme le montre la figure 3, l'instruction d'orientation consiste à tester tout d'abord si l'indicateur de déroutement DI est actif. Si l'indicateur est inactif, le programme principal suit son cours normal et exécute l'algorithme en ROM par exemple en effectuant le saut APPEL_1 vers ALGO_1. Si l'indicateur de déroutement DI est actif, l'instruction d'orientation déroute le programme à l'adresse indiquée par le contenu du registre AD_SAUT. La valeur AD_Cod_A stockée préalablement dans le registre AD_SAUT est chargée dans le compteur ordinal de l'Unité Centrale et, la séquence de code à l'adresse chargée est exécutée. Par contre, le sous programme, ALGO_1, par la volonté du programmeur, est appelé par APPEL_4 sans possibilité de déroutement, car aucune instruction d'orientation ne lui est associée.

Il est à noter que les expressions d'instruction d'interrogation et d'orientation sont en fait des macro instructions constituées par un ensemble d'instructions élémentaires exécutables par l'unité centrale.

Une même instruction d'orientation peut être exécutée un nombre illimitée de fois, tant que l'indicateur reste actif, le saut s'effectuera toujours à l'adresse mémorisée dans AD_SAUT. De même, comme le montre la figure 2, plusieurs instructions d'orientation " INS_ORT_1", INS_ORT_2, INS-ORT_3 avec le même code de référence "A", peuvent être implémentées dans le programme principal, leurs exécutions entraîneront le même effet. Dans ce cas, il convient d'étudier avec un soin tout particulier, l'adresse de retour au programme principal, des exemples de réalisation d'instruction de retour seront expliqués dans la suite de ce document:

En règle générale, le programmeur doit prendre soin qu'au moins une séquence d'instruction d'interrogation soit exécutée avant toute instruction d'orientation. Si la séquence de code ne doit être déroulée qu'une seule fois, une instruction d'effacement de l'indicateur de déroutement DI, visant à rendre inactif l'indicateur de déroutement DI, est exécutée par la séquence de code. Ainsi, une fois le retour dans le programme principal, aucun déroutement ne pourra plus s'effectuer lors des instructions d'orientation suivantes.

A la lumière de cet exemple, le premier avantage de séparer les deux séquences d'instructions d'interrogation et d'orientation apparaît. La séquence d'instruction d'interrogation, qui est plus élaborée et donc plus coûteuse en code, n'est mise dans le programme qu'une fois. Les séquences d'instruction d'orientation qui sont très courtes et peu coûteuses en place mémoire sont mises en place chaque fois que cela est nécessaire, d'où un gain de place dans la mémoire programme.

L'indicateur de déroutement DI peut très bien être remplacé par une valeur particulière du registre AD_SAUT. Si le registre AD_SAUT contient la valeur "NULL" qui n'est pas une valeur significative d'adresse de la mémoire non volatile pour un composant donné, cela signifie qu'aucun déroutement du programme principal n'est à prendre en compte. De même, si le contenu de la mémoire AD_TAB est une valeur non cohérente avec celle de début de la table d'orientation ("NULL" par exemple), on peut considérer qu'aucune séquence n'est disponible et par voie de conséquence, aucun déroutement envisagé.

Comme le montre la figure 4, plusieurs instructions d'interrogation (INS_INT_A, INS_INT_B) peuvent être introduites dans le programme principal. Chacune de ces instructions possède son propre code de référence inscrit dans la mémoire programme, et recherche la présence de ce code parmi les premières valeurs de la table d'orientation en mémoire programme. Si la valeur de ce code est bien en table, l'adresse de la séquence de code associé est mise dans le registre de travail AD_SAUT. Ainsi, l'exécution d'une instruction d'interrogation efface et remplace la valeur du registre AD_SAUT mise à jour par la précédente instruction d'interrogation.

Si une précédente instruction d'interrogation a mis à jour le registre AD_SAUT avec l'adresse de déroutement, et si une seconde instruction d'interrogation avec un code de référence différent s'exécute en ne trouvant pas son code de référence dans la table d'orientation, il est suffisant et judicieux d'effacer la précédente valeur d'AD_SAUT et ainsi, d'annuler tout déroutement jusqu'à la prochaine instruction d'interrogation. Cependant, on ne s'écarte pas de l'esprit de l'invention si on garde la précédente valeur en conservant ainsi le déroutement.

Un second avantage d'utiliser des références de code "A", "B"... inscrits dans une table d'orientation apparaît alors : cette table ne contient que des données utiles, ne se référant qu'aux déroutements effectifs voulus dans le programme principal. Ainsi, à tout moment, sa taille est optimisée, d'où un gain d'occupation mémoire.

Avantageusement, il est possible de stocker dans le programme principal, des séquences de code qui ne sont pas appelées par lui. A l'aide du mécanisme selon l'invention, il est possible d'associer à chacune de ces séquences une référence de code qui est mémorisée dans la table d'orientation avec l'adresse de début de la séquence. Ainsi, il est possible d'activer un code "dormant" dans la mémoire programme du dispositif portable.

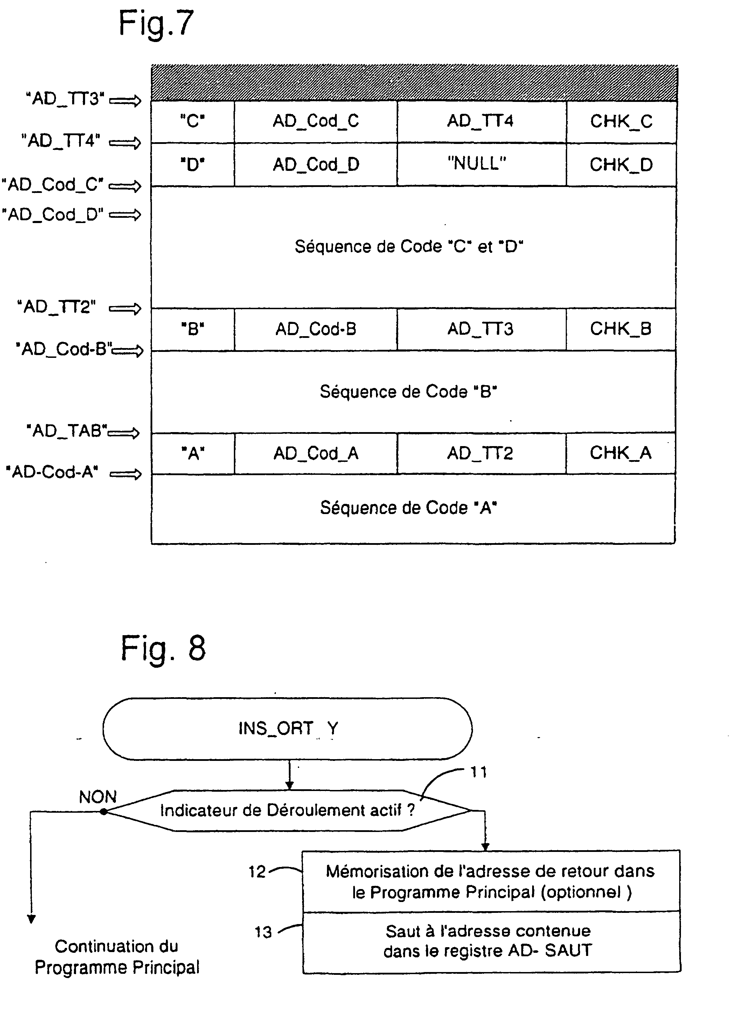

Avantageusement, il est aussi possible par les instructions d'orientation de définir plusieurs points d'entrée à une même séquence de code et de les associer à des codes de référence différents. De même, plusieurs séquences "A", "B" et "C" par exemple peuvent être regroupées en une seule séquence écrite d'un seul coup en mémoire programmable avec le code de référence "A" et le point d'entrée AD_Cod_A, les deux autres codes de référence et les points d'entrées sont écrits par la suite. Un exemple de table d'orientation permettant cette opération est présenté plus loin (figure 7).

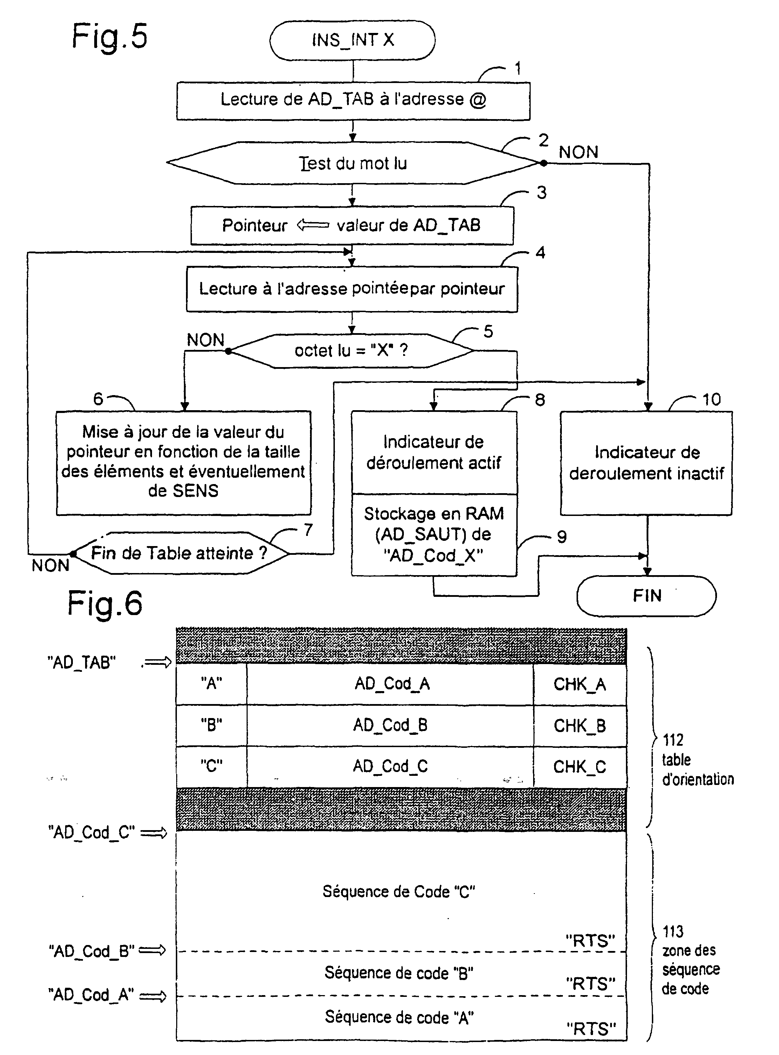

Le déroulement des instructions d'interrogation va être maintenant explicité, avec l'aide de la figure 5. Un paramètre d'entrée de cette instruction est la valeur notée "X" du code de référence correspondant à la séquence de code qui sera exécutée lors d'une prochaine instruction d'orientation, dans l'exemple, cette valeur est "X". A l'étape 1, le programme principal, en exécutant la séquence d'instruction d'interrogation, lit dans la zone système à l'adresse @ qui est connue par le programme en ROM le contenu AD_TAB qui est l'adresse de début de la table d'orientation. A l'étape 2, la séquence d'instruction d'interrogation teste le mot lu. Si le mot lu n'est pas significatif, la table d'orientation n'existe pas et aucun déroutement de code n'est envisageable. La séquence d'instruction d'interrogation est terminée et l'indicateur de déroutement DI est inactif (étape 10). Si le mot lu est significatif, la séquence d'instruction d'interrogation met à jour à l'étape 3 un pointeur tel que par exemple AD_SAUT en mémoire de travail avec la valeur AD_TAB lue. Puis à l'étape 4, la séquence d'interrogation lit un élément de la table pointé par ce pointeur. A l'étape 5 de la séquence d'interrogation la valeur du champ correspondant à la référence de code est comparée à la valeur du code de référence "X" fournie comme paramètre d'entrée. Si les deux valeurs sont identiques, la séquence d'interrogation positionne à l'étape 8 l'indicateur de déroutement DI à l'état actif. A l'aide du pointeur, la séquence d'interrogation lit à l'étape 9 la valeur d'adresse "AD_Cod_X" située aussitôt après le code de référence dans la table d'orientation. Cette valeur est stockée dans le registre AD_SAUT en mémoire de travail RAM. Si les deux valeurs de référence de code ne sont pas identiques, à l'étape 6 le pointeur est mis à jour pour pointer le code de référence suivant dans la table d'orientation. Cette mise à jour s'effectue en prenant en compte la taille de chaque élément de la table, si , par exemple, la table est composée de mots de 32 bits, la valeur du pointeur qui adresse des octets (8 bits) est augmentée de 4. La séquence d'interrogation teste à l'étape 7 si le mot de la mémoire programmable adressé par le pointeur est encore dans la table d'orientation. Ce test dépend de l'organisation de la table dont plusieurs exemples seront donnés par la suite. Si le mot pointé n'appartient plus à la table, la séquence d'instruction d'interrogation est terminée et l'indicateur de déroutement DI est positionné à l'état inactif par l'étape 10. Si le mot pointé est encore en table d'orientation, la séquence d'interrogation reboucle à l'étape 4.

En sortie de la séquence d'instruction d'interrogation, l'indicateur de déroutement DI est toujours positionné, s'il est actif, la valeur dans AD_SAUT est significative. Avantageusement, la séquence d'instructions d'interrogation peut être écrite par le programmeur qui réalise le programme principal comme un sous-programme avec d'une part , pour paramètres d'entrée : le code de référence, par exemple X, à chercher dans la table et éventuellement une adresse de retour et d'autre part, pour paramètre de sortie, un indicateur de déroutement DI spécifiant si le déroutement doit être effectivement réalisé. Il est possible lors de l'initialisation, d'effectuer une lecture de la table d'orientation et de stocker en mémoire de travail toutes les adresses correspondantes aux codes de référence existants, cela évite à chaque instruction d'interrogation de balayer systématiquement la table et, de rechercher inutilement un code qui n'existe pas.

La figure 6 montre un exemple de table d'orientation. Cette table est composée de mots d'orientation de 32 bits, par exemple, le premier champ, par exemple d'un octet, contient le code de référence, le deuxième champ, par exemple de deux octets suivants, contient l'adresse de début de la séquence de code en mémoire non volatile, le dernier champ, par exemple d'un octet, est optionnel, et peut contenir un code de somme de contrôle (CheckSum) : (CHK_A) permettant de contrôler l'intégrité de la valeur des deux premiers champs et/ou de la séquence de code attachée. Dans cette table d'orientation, les éléments se suivent de manière contiguë. La fin de table est atteinte lorsque le mot suivant est vierge. La valeur SENS lue dans la zone système indique le sens d'évolution du pointeur de table : par adresses croissantes ou décroissantes. Dans la figure 6, c'est le sens des adresses croissantes qui est choisi.

La disposition de cette table est intéressante lorsqu'elle contient un grand nombre d'éléments. En effet, les codes de références de ces éléments peuvent se classer selon un certain ordre, l'organisation de ces éléments dans la table peut donc se faire selon des références croissantes : "A","B","C","D","E"...ou décroissantes "Z","Y","X","W",... La taille en octets de la table est déterminée. Elle est soit mémorisée dans une zone (Ta Ta figure 1) de la zone système, soit par une pré-lecture de la table lors de l'initialisation. Lors de la recherche d'un certain code de référence, il est alors possible d'appliquer des algorithmes de tri, par exemple, le pointeur est initialisé avec l'adresse de l'élément situé en milieu de la table en ajoutant à la valeur contenue dans AD_TAB la moitié du nombre d'octets de la table précédemment déterminé puis, le code de référence lu par le pointeur est comparé avec celui à rechercher, selon le résultat le pointeur se déplace en avant ou en arrière et pointe alors au milieu de la zone restante à explorer. Ce mécanisme permet de gagner du temps dans la recherche d'une référence de code en table. Ainsi, si la table possède n éléments ordonnés, la façon classique de recherche en passant d'un élément au suivant aboutit à la lecture en moyenne de n/2 éléments pour trouver le bon, Une recherche comme indiquée précédemment permet de rechercher en lisant (log n) éléments, ce qui est un avantage lorsque la valeur n est grande.

Si, après avoir balayé toute la table, aucune valeur lue dans la table ne possède la référence "A" recherchée, aucun déroutement du programme principal vers la séquence de code "A" ne sera réalisé, un indicateur de déroutement DI en mémoire de travail est dans ce cas mis en position inactive.

Cette disposition oblige le programmeur à prévoir dès la première inscription d'une séquence de codes la taille de la table d'orientation de manière à laisser suffisamment de place mémoire après la valeur de AD_TAB pour compléter cette table et, éventuellement, écrire d'autres séquences de codes.

Une variante de réalisation de table d'orientation peut contenir uniquement la référence de code et dans ce cas le programme d'instruction d'interrogation calculera l'adresse de saut en appliquant un algorithme ayant comme paramètre d'entrée la référence de code.

La figure 7 montre un autre exemple de table d'orientation qui évite au programmeur de prévoir en mémoire Ta Ta l'information correspondant à sa taille ou de faire une pré-lecture de table pour déterminer sa taille. Cette table contient des mots d'orientation ayant un champ de plus que les trois champs précédents : valeur de code de référence, adresse de début des séquences de code et somme de contrôle (Check-Sum). Le champ supplémentaire, qui occupe par exemple les quatrième et cinquième octets, contient la valeur d'adresse de l'élément suivant dans la table d'orientation. La table se lit de la façon suivante : le mot d'orientation correspondant à la première séquence de code se situe à l'adresse AD_TAB, le code de référence est "A" et la séquence commence à l'adresse AD_Cod_A, le mot d'orientation suivant se situe à l'adresse AD_TT2. A cette adresse AD_TT2, se trouve le mot correspondant à la seconde séquence de code qui a pour code de référence "B" et qui commence à l'adresse AD_Cod_B. Le mot suivant se situe à l'adresse AD_TT3 ; et ainsi de suite. La fin de table est atteinte lorsque la valeur d'adresse du mot d'orientation suivant est par exemple "NULL". A noter dans cet exemple : les séquences de code référencées "C" et "D" appartiennent à un même bloc. Ce bloc possède en fait deux points d'entrée : AD_Cod_C, et AD_Cod_D.

On peut parfaitement concevoir qu'une ou plusieurs séquences de code ou parties de séquences soient écrites dans la zone de données de la mémoire programmable. Dans ce cas, il est conseillé de l'introduire dans une zone bien délimitée et connue en tant que telle par la partie applicative du programme principal et, éventuellement par souci de sécurité d'en interdire la lecture par l'extérieur.

Le déroulement d'une séquence d'instructions d'orientation va être maintenant explicité avec l'aide de la figure 8. A l'étape 11, la séquence d'orientation teste l'indicateur de déroutement DI. S'il est inactif le programme principal continue en séquence. Si l'indicateur de déroutement DI est actif, la séquence se poursuit à l'étape 12, par une mémorisation de l'adresse de retour dans le programme principal. Cette mémorisation est optionnelle car de toutes les façons, c'est la séquence qui décide de l'adresse de retour dans le programme principal ou ailleurs. Si plusieurs séquences d'instructions d'orientation peuvent appeler une même séquence de code, il est intéressant de mémoriser l'adresse de retour spécifique à chaque séquence d'instructions d'orientation, de manière à pouvoir revenir à proximité de l'instruction qui a provoqué le déroutement, cette mémorisation peut s'effectuer dans un registre de travail AD_RET ou dans la pile, dans ce dernier cas, la séquence de code mémorisée dans la mémoire programmable est considérée comme un sous-programme qui se termine par exemple par un code spécifique de "retour de sous-programme" ("RTS"). Puis, à l'étape 13 la séquence d'orientation se termine par un saut à la séquence de code commençant à l'adresse mémorisée dans le registre de la mémoire de travail AD_SAUT par une précédente séquence d'interrogation.

L'inscription de nouvelles séquences de codes et la mise à jour de la table d'orientation vont maintenant être explicitées.

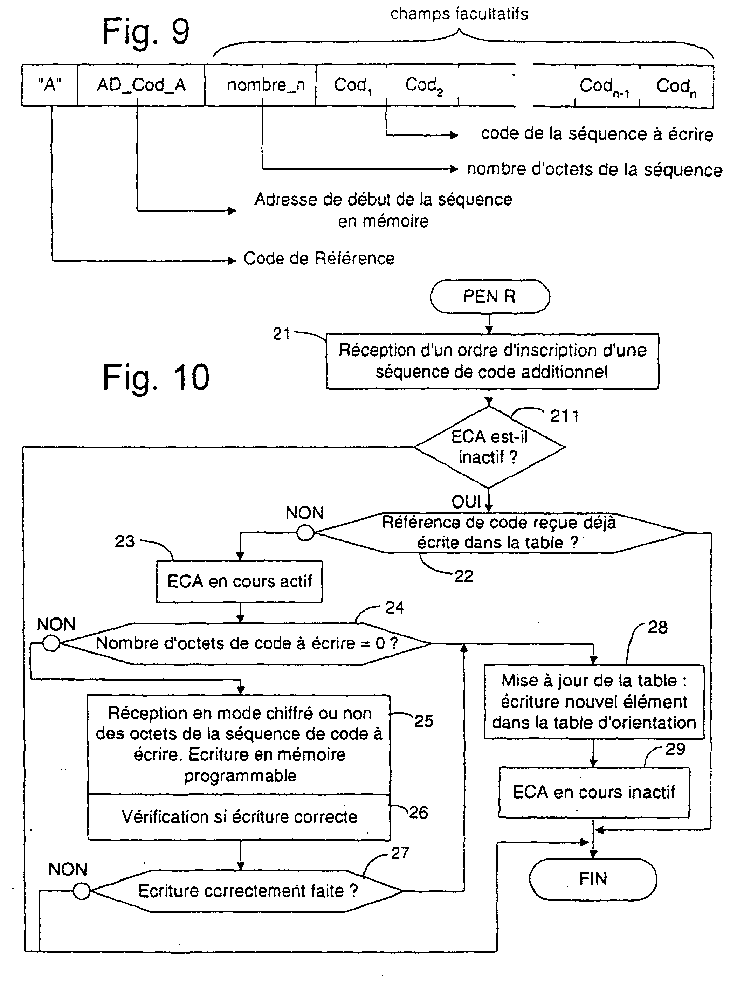

Un ordre ECR_SEQ_E d'enregistrement de séquence de code est envoyé de l'extérieur par le dispositif d'entrée sortie (13) à la carte. Les données de cet ordre se décomposent en plusieurs champs comme le montre la figure 9. L'ordre ECR_SEQ_E comporte :
- dans un premier champ le code de référence : "A", "B", ...,
- dans un second champ l'adresse de début de la séquence,
- dans un troisième champ facultatif la taille de la séquence, c'est-à-dire le nombre d'octets à écrire,
- et dans un quatrième champ facultatif, la séquence, c'est-à-dire les octets à écrire.

Les troisième et quatrième champs sont inutiles lorsque la séquence de code est déjà inscrite en mémoire non volatile (FRAM, EPROM, EEPROM ou ROM).

La figure 10 montre un organigramme illustrant le déroulement du programme PENR d'exécution de l'instruction ECR_SEQ_E d'enregistrement d'une nouvelle séquence E. A l'étape 21, l'ordre est envoyé à la carte et les deux premiers champs de l'ordre sont analysés. Une fois le type d'instruction envoyé à la carte reconnu par celle-ci, le programme de gestion de l'enregistrement peut vérifier que la valeur dans AD_TAB est cohérente, si non, la table d'orientation n'est pas opérationnelle, il n'est donc pas possible d'écrire une nouvelle séquence de code et l'ordre est interrompu.

A l'étape 211, si un drapeau ECA est inactif, le programme se poursuit à l'étape, sinon l'exécution du programme est interrompue.

A l'étape 22, le programme d'enregistrement contrôle si une référence identique est déjà inscrite. Si la table contient déjà une référence de code identique à celle reçue, l'ordre est interrompu. Ce contrôle particulier à la présente invention offre un réel avantage par rapport à l'art antérieur décrit précédemment, car il permet de ne pas écrire par erreur deux séquences de codes avec la même référence. A l'étape 23, le programme de gestion de l'enregistrement rend actif un drapeau en mémoire non volatile : ECA_en_cours (Ecriture de Code Additionnel en cours) indiquant qu'un enregistrement d'une nouvelle séquence est en cours. Puis, à l'étape 24, le programme PENR teste le nombre d'octets de codes à écrire. Si celui-ci est nul, aucune nouvelle séquence de code n'est à écrire et seule une nouvelle référence de code doit être rajoutée dans la table, c'est le cas d'activation de code "dormant" en ROM ou le rajout d'un point d'entrée à une séquence de code déjà écrite en mémoire programmable.

Si le nombre d'octets de codes à écrire n'est pas nul la carte est mise en mode réception, à l'étape 25. Les octets sont reçus, éventuellement déchiffrée et/ou signée si c'est le mode choisi, puis écrits "dans la foulée" à l'adresse de début de la séquence définie dans le deuxième champ de l'ordre ECR_SEQ_E. Dans tous les cas, l'adresse d'écriture doit être vierge, sinon l'ordre est interrompu en laissant le drapeau ECA_en_cours actif, ce qui a pour effet de bloquer définitivement la carte, à l'exception du mécanisme de régénération décrit plus loin. Une fois tous les octets de codes reçus et la séquence correspondante écrite, le programme (PENR) vérifie à l'étape (26) si l'écriture s'est correctement déroulée. Un moyen pour cela consiste à élaborer un calcul de somme de contrôle (CheckSum) ou une signature à partir de la valeur des octets écrits et leurs adresses. A l'étape 27, le programme (PENR) teste la validité du code enregistré. Si l'écriture ne s'est pas bien déroulée, l'ordre est interrompu en laissant le drapeau ECA_en_cours actif.

Si l'écriture s'est bien déroulée ou, si il n'y a pas de séquence de code à écrire, le programme PENR met à jour, à l'étape 28, la table d'orientation, en écrivant le nouveau mot d'orientation. Dans le schéma de table décrit par la figure 6, le nouveau mot d'orientation est écrit immédiatement après le dernier mot. Le programme PENR détermine le dernier élément en parcourant la table depuis l'adresse AD_TAB, en progressant suivant le sens indiqué dans SENS. La somme de contrôle (CheckSum) écrite dans le troisième champ de mot d'orientation peut être indifféremment envoyée par l'extérieur ou calculée par la carte. Cette somme de contrôle (CheckSum) peut être de type simple somme ou OU exclusif (XOR) des octets ou de type cryptographique, elle peut porter sur le mot de la table ou peut inclure la séquence de code rattachée à ce mot. Dans le schéma de table décrit par la figure 7, le nouveau mot est écrit dans un emplacement vierge de la zone des séquences et mots d'orientation de la table. Le programme PENR doit aussi modifier le troisième champ de l'avant dernier champ de la table pour qu'il contienne l'adresse AD_Cod_E de cette nouvelle séquence de code "E".

Lorsque toutes ces opérations se sont bien déroulées, à l'étape 29 du programme PENR, le drapeau ECA_en_cours est rendu inactif, ce qui a pour principal résultat de valider la table d'orientation et les séquences. Si l'ordre ne s'est pas correctement déroulé, un message d'erreur envoyé par le programme PENR à l'extérieur renseigne l'utilisateur sur le type d'erreur.

Il faut signaler le cas particulier pour inscrire le contenu de AD_TAB et éventuellement de SENS. En effet, la description précédente n'est valable que pour une table d'orientation déjà commencée. On rappelle que AD_TAB contient l'adresse de début de la table d'orientation et que si celle-ci est organisée comme le décrit la figure 6 le champ SENS indique le sens de parcours dans cette table.

En utilisant le format des données décrits à la figure 9, on peut dédier, une référence de code particulière pour inscrire le contenu de AD_TAB et éventuellement de SENS. En se référant toujours à la figure 9, pour cette référence particulière, le champ AD_Cod_A ne serait pas significatif, tandis que le champ contenant le code de la séquence contiendrait le contenu à mettre dans AD_TAB et éventuellement SENS.

Une autre façon de faire, et qui serait valable pour l'inscription de toute donnée (séquences de code, éléments de la table d'orientation...) serait d'utiliser le format suivant :

| | | |
|---|---|---|
| Adresse de début d'écriture | Nombre d'octets | Données |

Cette méthode offre l'avantage essentiel de permettre d'écrire n'importe quelle donnée sous la responsabilité du concepteur de code additionnel.

Pour identifier un système d'exploitation ou certaines de ses particularités telle que l'utilisation d'un code additionnel il suffit de faire envoyer par la carte des octets d'identification, lorsque l'on met la carte sous tension. La mise sous tension est une opération indispensable avant de pouvoir dialoguer avec une carte. De manière interne, le système d'exploitation peut bâtir sa réponse à la remise à zéro en analysant le pointeur AD_SAUT de la table d'orientation et la table elle-même.

Une instruction d'invalidation INS_INA_C d'une séquence de code envoyée de l'extérieur de la carte a pour but, par son programme (PINA) de traitement, d'inactiver un déroutement correspondant à un certain code de référence, par exemple C. Une première façon de faire consiste à effacer toutes les données relatives à ce code : l'élément dans la table d'orientation et toute la séquence correspondante. Puis à mettre à jour la table d'orientation. Une seconde façon de faire, plus rapide consiste à changer dans la table d'orientation le code de référence correspondant à la séquence de code à invalider par une autre valeur : "NULL" par exemple, ce code n'existant plus, aucune instruction d'interrogation ne pourrait mettre à jour la mémoire de travail AD_SAUT pour exécuter cette séquence. Enfin une dernière façon consiste à remplacer la valeur d'adresse en table d'orientation par une valeur d'adresse impossible : "NULL" par exemple ; ou encore diriger l'appelant vers une séquence de code simple qui "redonne la main". Cette dernière manière de faire est parfaitement adaptée aux séquences de code inscrite en ROM, ce code "dormant" peut ainsi très facilement être activé et désactivé.

Une inscription de régénération INS_REG provenant de l'extérieur de la carte a pour but, par son programme de traitement PREG, d'effacer une ou plusieurs séquences de codes et/ou éléments de table ou, d'une manière générale, une suite de données. Plusieurs méthodes sont possibles : les adresses de début et de fin d'un espace mémoire sont envoyées à la carte et tous les octets de cet espace sont effacés. Cette méthode un peu "brutale" doit être utilisée avec précaution pour ne pas rendre inexploitable des séquences qui ne doivent pas être effacées. Une autre méthode consiste à préciser à la carte les codes de références à effacer ainsi que, si elles existent, les séquences de codes en mémoire programmable correspondante, à la suite d'un tel ordre, le programme doit déterminer l'adresse des éléments de table correspondant puis, effacer ces éléments et déterminer les adresses de début et de fin des séquences de codes et enfin effacer le contenu. La méthode de recherche de ces adresses puis de mise à jour de la table dépend fortement de la structure de la table d'orientation, voir figures 6 et 7. La méthode ne pose pas de problème pour l'homme de métier et n'a donc pas besoin d'être explicitée.

Un dernier ordre REC_ESP_VRG qui peut faciliter la mise à jour de la table et des séquences de code, est "Recherche Espace Vierge". Envoyé à la carte, sans donnée particulière, cet ordre permet de faire envoyer par le programme PREV de traitement de cet ordre à l'extérieur les emplacements vierges de la mémoire programmable (11) avec les adresses de début et de fin de chacun de ces emplacements. L'utilisateur désireux de rajouter des séquences de codes peut, à la suite de cet ordre, vérifier si la place disponible est suffisante et, définir la séquence de code en fonction de son adresse d'implantation.

Dans une variante de réalisation permettant le contrôle de l'intégrité de la séquence de code additionnel, juste avant d'effectuer le saut dans la séquence d'instruction d'orientation, il est alors nécessaire de prévoir deux champs supplémentaires dans chaque élément de la table d'orientation.

Un premier champ supplémentaire, qui indique la taille de la séquence de code additionnel rattachée à l'élément et, un deuxième champ supplémentaire contenant la somme de contrôle (CheckSum) initiale correct.

Si la somme de contrôle (CheckSum) calculée diffère de celle initiale, le système d'exploitation arrête l'exécution en signalant par un mot d'état approprié. Cette méthode offre l'avantage qu'un contrôle est effectué avant chaque exécution de la nouvelle séquence de code mais pénalise le temps d'exécution de l'ordre concerné ou peut se limiter à ce contrôle lors uniquement de la première exécution.

La deuxième méthode consiste à disposer d'un ordre dédié qui effectue un calcul de la somme de contrôle (CheckSum) d'une zone de mémoire programmable et compare la valeur calculée avec celle fournie ou inscrite préalablement dans le champ CHK_X. Ainsi le gestionnaire du système peut activer périodiquement cet ordre pour s'assurer que tout est ok.

Un système d'exploitation qui supporte le mécanisme d'enregistrement et d'exécution de code additionnel peut être bridé afin de réduire ses capacités par des verrous d'interdiction en mémoire programmable tels que :
- CAI : Code Additionnel Interdit qui serait testé par le système d'exploitation avant tout enregistrement,
- RCI : Régénère Carte Interdit qui serait testé par le système d'exploitation avant toute régénération.

Ces verrous s'apparentent quant à leur gestion aux verrous (locks) de gestion des phases de vie des systèmes d'exploitation des cartes.

Une utilisation de cette possibilité consiste à charger du code additionnel en EEPROM (11) puis de positionner les verrous d'interdictions RCI et CAI, pour figer le code rajouté.

Bien sûr, l'invention n'est nullement limitée à l'exemple de réalisation précédemment décrit mais, au contraire, comprend tous les moyens constituants des équivalents techniques des moyens précisément décrits ainsi que leurs combinaisons, si celles-ci sont exécutées dans l'esprit de l'invention et mises en oeuvre dans le cadre des revendications suivantes.

## Revendications

1. Dispositif d'exécution de séquences de code dans un support comprenant un circuit intégré (10) capable d'exécuter des séquences de code et d'une part une première mémoire (12) contenant un programme principal et éventuellement d'autres séquences de codes exécutables par le circuit intégré et d'autre part une seconde mémoire (11) programmable non volatile contenant éventuellement des séquences de codes exécutables par le circuit intégré et une troisième mémoire de travail (14), **caractérisé en ce qu'**une table d'orientation contenue dans la seconde mémoire (11) contient au moins un champ contenant une donnée de référence de code :
des premiers moyens (INS_INT) permettent :
- de vérifier la présence d'une référence de code,
- de mémoriser en mémoire de travail la donnée d'adresse associée à la référence du code et de positionner un indicateur de déroutement DI et,
des seconds moyens (INS_ORT) permettent :
- de tester l'indicateur de déroutement DI et,
- d'effectuer le saut à l'adresse pointée par le contenu de la mémoire de travail AD_SAUT.

2. Dispositif selon la revendication 1, **caractérisé en ce que** la donnée d'adresse associée d'une séquence de code contenue dans l'une des trois mémoires à la référence de code est calculée à partir de la référence de code.

3. Dispositif selon la revendication 1, **caractérisé en ce qu'**un deuxième champ contient la donnée d'adresse d'une séquence de code contenue dans l'une des trois mémoires.

4. Dispositif selon la revendication 1, **caractérisé en ce qu'**il comporte dans une zone éventuellement protégée de la mémoire programmable (11) une information (AD_TAB) définissant la première adresse et éventuellement le sens de recherche (SENS) pour les premiers moyens de vérification.

5. Dispositif selon la revendication 1, **caractérisé en ce que** la table d'orientation comporte un champ supplémentaire (AD_TT) indiquant l'adresse suivante dans la table où se trouvent les informations correspondant à la référence de code suivante.

6. Dispositif selon la revendication 1, **caractérisé en ce que** la table d'orientation comporte un champ supplémentaire (CHK) permettant de s'assurer de l'intégrité des champs précédents et/ou de séquence de code rattachée par comparaison avec le résultat fourni par un moyen de calcul d'une somme de contrôle.

7. Dispositif selon la revendication 1, **caractérisé en ce que** les seconds moyens comportent des moyens de mémoriser en mémoire de travail (AD_RET) une adresse de retour après un saut lorsque plusieurs seconds moyens sont disponibles pour effectuer un saut à destination de la même adresse de séquence.

8. Dispositif selon selon la revendication 1, **caractérisé en ce qu'**il comporte des moyens CAI d'empêcher l'enregistrement d'un code additionnel, et des moyens RCI d'empêcher une régénération de la carte.

9. Procédé d'enregistrement d'un nouveau code dans un dispositif selon la revendication 4, **caractérisé en ce qu'**il consiste :
- à recevoir un ordre d'enregistrement ;
- à vérifier la présence d'un premier champ constituant la référence de code A, B, C... et d'un second champ représentant l'adresse associée à la référence de code AD_Cod_A, AD_Cod_B, AD_Cod_C...
- à vérifier qu'un drapeau ECA n'est pas actif ;
- à vérifier que la valeur de la première adresse AD_TAB est cohérente ;
- à contrôler que la référence fournie par le premier champ n'existe pas dans la table;
- à positionner le drapeau ECA dans la zone de mémoire programmable protégée à l'état actif ;
- à recevoir et écrire les informations correspondant au nouveau code ;
- à vérifier que l'opération s'est déroulée correctement et mettre à jour la table d'orientation ;
- à positionner le drapeau ECA à l'état inactif.

10. Procédé selon la revendication 9, **caractérisé en ce que** l'opération de mise à jour de la table comporte une écriture du champ d'adresse suivante dans la table d'orientation à l'adresse correspondant au mode d'orientation du code précédent le code écrit.

11. Produit de programme d'ordinateur pour un dispositif à microcircuit comprenant
- un circuit intégré (10) capable d'exécuter des séquences de code ;
- une première mémoire contenant un programme principal et éventuellement d'autres séquences de codes exécutables par le circuit intégré ;
- une seconde mémoire (11) programmable non volatile contenant éventuellement des séquences de codes exécutables par le circuit intégré ; et
- une troisième mémoire de travail
**caractérisé en ce que** le produit programme d'ordinateur comprend
- une table d'orientation pour la seconde mémoire, la table d'orientation contenant au moins un champ comprenant une donnée de référence de code,
- un jeu d'instructions qui, quand celui-ci est chargé dans le dispositif à micro-circuit, amène le micro-circuit à effectuer les opérations suivantes :
- vérifier la présence d'une référence de code ;
- mémoriser en mémoire de travail la donnée d'adresse associée à la référence du code et positionner un indicateur de déroutement DI ;
- tester l'indicateur de déroutement DI,
- et effectuer le saut à l'adresse pointée par le contenu de la mémoire de travail AD_SAUT.

## Patentansprüche

1. Vorrichtung zur Ausführung von Codefolgen in einem Datenträger mit einer zur Ausführung von Codefolgen fähigen integrierten Schaltung (10) und einerseits einem ersten Speicher (12) mit einem Hauptprogramm und eventuell weiteren von der integrierten Schaltung ausführbaren Codefolgen und andererseits einem programmierbaren permanenten zweiten Speicher (11), der eventuell von der integrierten Schaltung ausführbare Codefolgen enthält, und einem dritten Arbeitsspeicher (14), **dadurch gekennzeichnet, dass** eine im zweiten Speicher (11) enthaltene Richtungstabelle mindestens ein Feld mit Codereferenzdaten enthält: wobei erste Mittel (INS_INT) ermöglichen:
- das Vorhandensein einer Codereferenz zu prüfen,
- im Arbeitsspeicher die der Codereferenz zugeordneten Adressdaten zu speichern und einen Sprungindikator DI zu positionieren,
und zweite Mittel (INS_ORT) ermöglichen:
- den Sprungindikator DI zu testen und
- den Sprung zu der vom Inhalt des Arbeitsspeichers AD_SAUT angezeigten Adresse durchzuführen.

2. Vorrichtung nach Anspruch 1, **dadurch gekennzeichnet, dass** die der Codereferenz zugeordneten Adressdaten einer in einem der drei Speicher enthaltenen Codefolge ausgehend von der Codereferenz berechnet werden.

3. Vorrichtung nach Anspruch 1, **dadurch gekennzeichnet, dass** ein zweites Feld die Adressdaten einer in einem der drei Speicher enthaltenen Codefolge enthält.

4. Vorrichtung nach Anspruch 1, **dadurch gekennzeichnet, dass** sie in einer eventuell geschützten Zone des programmierbaren Speichers (11) eine Information (AD_TAB) enthält, die die erste Adresse und eventuell die Suchrichtung (SENS) für die ersten Prüfmittel definiert.

5. Vorrichtung nach Anspruch 1, **dadurch gekennzeichnet, dass** die Richtungstabelle ein zusätzliches Feld (AD_TT) umfasst, das die nächste Adresse in der Tabelle angibt, an der sich die der nächsten Codereferenz entsprechenden Informationen befinden.

6. Vorrichtung nach Anspruch 1, **dadurch gekennzeichnet, dass** die Richtungstabelle ein zusätzliches Feld (CHK) umfasst, das die Ganzzahligkeit der vorausgehenden Felder und/oder der zugehörigen Codefolge im Vergleich zu dem von einem Rechenmittel einer Kontrollsumme bereitgestellten Ergebnis gewährleistet.

7. Vorrichtung nach Anspruch 1, **dadurch gekennzeichnet, dass** die zweiten Mittel Mittel zum Speichern im Arbeitsspeicher (AD_RET) einer Rücksprungadresse nach einem Sprung umfassen, wenn mehrere zweite Mittel vorhanden sind, um einen Sprung zur selben Sequenzadresse zu machen.

8. Vorrichtung nach Anspruch 1, **dadurch gekennzeichnet, dass** sie Mittel CAI zum Verhindern des Speicherns eines zusätzlichen Codes umfasst sowie Mittel RCI zum Verhindern einer Regenerierung der Karte.

9. Speicherverfahren eines neuen Codes in einer Vorrichtung nach Anspruch 4, **dadurch gekennzeichnet, dass** es in folgendem besteht:
- Aufnehmen eines Speicherbefehls;
- Prüfen, ob ein erstes Feld vorhanden ist, das die Codereferenz A, B, C... bildet und ob ein zweites Feld vorhanden ist, das die der Codereferenz AD_Cod_A, AD_Cod_B, AD_Cod_C... zugeordnete Adresse darstellt;
- Prüfen, ob kein ECA-Kennzeichen aktiv ist;
- Prüfen, ob der Wert der ersten Adresse AD_TAB in sich widerspruchsfrei ist;
- Kontrollieren, ob die vom ersten Feld bereitgestellte Referenz nicht in der Tabelle existiert;
- Positionieren des ECA-Kennzeichens in der im aktiven Zustand geschützten programmierbaren Speicherzone;
- Aufnehmen und Schreiben der dem neuen Code entsprechenden Informationen;
- Prüfen, ob der Vorgang richtig abgelaufen ist und Aktualisieren der Richtungstabelle;
- Positionieren des ECA-Kennzeichens in den inaktiven Zustand.

10. Verfahren nach Anspruch 9, **dadurch gekennzeichnet, dass** der Aktualisierungsvorgang der Tabelle ein Schreiben des nächsten Adressfelds in der Richtungstabelle an der Adresse umfasst, die dem Richtungsmodus des dem geschriebenen Code vorausgehenden Codes entspricht.

11. Computerprogrammprodukt für eine Vorrichtung mit Mikroschaltung, welche folgendes umfasst:
- eine zur Ausführung von Codefolgen fähige integrierte Schaltung (10);
- einen ersten Speicher mit einem Hauptprogramm und eventuell weiteren von der integrierten Schaltung ausführbaren Codefolgen;
- einen programmierbaren permanenten zweiten Speicher (11) mit eventuell von der integrierten Schaltung ausführbaren Codefolgen; und
- einen dritten Arbeitsspeicher,
**dadurch gekennzeichnet, dass** das Computerprogrammprodukt folgendes umfasst:
- eine Richtungstabelle für den zweiten Speicher, wobei die Richtungstabelle mindestens ein Feld enthält, das Codereferenzdaten umfasst,
- eine Reihe von Anleitungen, welche, wenn sie auf die Vorrichtung mit Mikroschaltung geladen werden, die Mikroschaltung dazu veranlassen, folgende Operationen auszuführen:
- Prüfen, ob eine Codereferenz vorhanden ist;
- Speichern im Arbeitsspeicher der der Codereferenz zugeordneten Adressdaten und Positionieren eines Sprungindikators DI;
- Testen des Sprungindikators DI,
- und Ausführen des Sprungs zur vom Inhalt des Arbeitsspeichers AD_SAUT angezeigten Adresse.

## Claims

1. Device for the execution of code sequences in a support comprising an integrated circuit (10) capable of executing code sequences and a first memory (12) containing a main program plus possibly other code sequences that can be executed by the integrated circuit and a second non volatile programmable memory (11) possibly containing code sequences that can be executed by the integrated circuit and a third working memory (14), **characterised in that** an orientation table contained in the second memory (11) contains at least one field including a code reference data item:
first means (INS_INT) are used to:
- check the presence of a code reference,
- store in working memory the address data associated with the code reference and set a deviation indicator DI and,
second means (INS_ORT) used to:
- test the deviation indicator DI and,
- jump to the address pointed by the content of the working memory AD_SAUT.

2. Device according to claim 1, **characterised in that** the address data of a code sequence contained in one of the three memories associated with the code reference is calculated from the code reference.

3. Device according to claim 1, **characterised in that** a second field contains the address data of a code sequence contained in one of the three memories.

4. Device according to claim 1, **characterised in that** it includes in a possibly protected area of the programmable memory (11) information (AD_ TAB) defining the first address and possibly the search direction (SENS) for the first verification means.

5. Device according to claim 1, **characterised in that** the orientation table includes an additional field (AD_TT) indicating the next address in the table containing the information corresponding to the next code reference.

6. Device according to claim 1, **characterised in that** the orientation table includes an additional field (CHK) used to check the integrity of the previous fields and/or code sequence attached by comparison with the result supplied by a means to calculate a checksum.

7. Device according to claim 1, **characterised in that** the second means include means to store in working memory (AD_RET) a return address after a jump when several second means are available to make a jump to the same sequence address.

8. Device according to claim 1, **characterised in that** it includes means CAI to prevent the storage of an additional code, and means RCI to prevent regeneration of the card.

9. Method to store a new code in a device according to claim 4, **characterised in that** it consists in:
- receiving a store instruction;
- checking the presence of a first field forming the code reference A, B, C... and of a second field representing the address associated with the code reference AD_Cod_A, AD_Cod_B, AD_Cod_C, etc.
- checking that a flag ECA is not active;
- checking that the value of the first address AD_TAB is consistent;
- checking that the reference supplied by the first field is not included in the table;
- setting the flag ECA in the protected programmable memory area to active state;
- receiving and writing the information corresponding to the new code;
- checking that the operation took place correctly and updating the orientation table;
- setting the flag ECA to inactive state.

10. Method according to claim 9, **characterised in that** the operation to update the table includes writing the next address field in the orientation table at the address corresponding to the orientation mode of the code preceding the code written.

11. Computer program product for a microcircuit device comprising
- an integrated circuit (10) capable of executing code sequences;
- a first memory containing a main program plus possibly other code sequences that can be executed by the integrated circuit;
- a second non volatile programmable memory (11) possibly containing code sequences that can be executed by the integrated circuit; and
- a third working memory
**characterised in that** the computer program product comprises
- an orientation table for the second memory, the orientation table containing at least one field including a code reference data item,
- a set of instructions which, when it is loaded in the microcircuit device, makes the microcircuit perform the following operations:
- check the presence of a code reference;
- store in working memory the address data associated with the code reference and set a deviation indicator DI;
- test the deviation indicator DI,
- and jump to the address pointed by the content of the working memory AD_SAUT.
